# DEMANDE DE BREVET EUROPEEN

(11) **EP 4 568 175 A1**
(43) Date de publication de la demande: **11.06.2025**
(21) Numéro de dépôt: 24217338.3
(22) Date de dépôt: 04.12.2024
(51) Int. Cl.: H04L 9/32

(54) **SYSTEME ELECTRONIQUE D AUTHENTIFICATION**

(30) Priorité: 07.12.2023 FR 2313750
(71) Demandeur: Commissariat à l'Energie Atomique et aux Energies Alternatives, 75015 Paris (FR)
(72) Inventeur: PEBAY-PEYROULA, Florian, 38054 GRENOBLE CEDEX 09 (FR); RASCLE, Angélique, 38054 GRENOBLE CEDEX 09 (FR)
(74) Mandataire: Brevalex

(57) **Abrégé**

Système électronique d'authentification comportant un calculateur (102), un dispositif mémoire (106) connecté au calculateur (102), et un ensemble de composants électroniques (104), le calculateur (102) et les composants électroniques (104) sont connectés entre eux par des liens directs ou indirects selon une configuration prédéterminée, chacun des composants électroniques (104) étant muni d'une PUF destinée à appliquer un protocole d'authentification de type défi-réponse, caractérisé en ce que le système électronique est configuré pour diffuser un unique défi (C) à l'ensemble de composants électroniques (104), et en ce que le calculateur (102) est configuré pour recevoir en retour de l'ensemble de composants électroniques au moins une réponse (R_{c}) lui permettant de vérifier l'intégrité de cet ensemble de composants électroniques (104) en comparant ladite au moins une réponse à au moins une réponse attendue (R'_{c}) préalablement mémorisée dans le dispositif mémoire (106), l'intégrité de l'ensemble de composants électroniques (104) étant authentifié comme étant valide si ladite au moins une réponse (R_{c}) et ladite au moins une réponse attendue (R'_{c}) coïncident.

## Description

### DOMAINE TECHNIQUE DE L'INVENTION

Le domaine de l'invention est celui de la sécurisation des données, et notamment celui des systèmes dotés de composants électroniques et dans lesquels une sécurisation importante des données traitées est requise.

### ÉTAT DE LA TECHNIQUE

Un système électronique peut comprendre plusieurs composants électroniques de type capteurs qui sont susceptibles de mesurer des paramètres physiques à partir desquels il est possible d'extraire des informations, ou fonctions, considérées comme critiques ou sensibles.

Par exemple, les lunettes de réalité étendue comportent plusieurs capteurs destinés à mesurer des paramètres qui peuvent être confidentiels. Ainsi, il est essentiel d'avoir confiance en ce système et d'être sûr que tous les capteurs donnent des informations issues du système. En outre, il est important de vérifier que le système est intègre et qu'il n'y a aucun doute sur la fiabilité des connexions entre les différents composants électroniques.

Le document US 2019/312740 traite de la sécurisation de capteurs se basant sur l'utilisation de fonctions physiques non-clonables PUF (« Physical Unclonable Function » en anglais) générée à partir de données d'un premier capteur calibré. Un second capteur non calibré est également utilisé, et la PUF générée est comparée avec une base de données de PUFs d'identification du capteur. Les données utilisées pour la génération de la PUF peuvent correspondre à des signaux physiques ou chimiques obtenus dans le premier capteur. Ce document ne propose pas une sécurisation sur toute la chaîne d'exploitation du système et plus particulièrement, ne propose pas de vérifier l'intégrité du système.

En effet, les composants électroniques peuvent être très nombreux et peuvent être connectés entre eux en chaine ou selon une configuration quelconque. Il est ainsi important d'être sûr que le système est intègre dans le sens que c'est bien toujours les mêmes composants qui sont présents dans ce système.

Ainsi, l'objet de la présente invention est de remédier aux inconvénients précités en proposant un procédé et un système d'authentification permettant de réaliser une authentification mutuelle entre les différents composants électroniques du système instaurant par conséquent, un important niveau d'intégrité et de fiabilité des connexions et d'informations entre ces différents composants électroniques.

### EXPOSÉ DE L'INVENTION

L'invention propose un système électronique d'authentification comportant un calculateur, un dispositif mémoire connecté au calculateur, et un ensemble de composants électroniques, le calculateur et les composants électroniques sont connectés entre eux par des liens directs ou indirects selon une configuration prédéterminée, chacun des composants électroniques étant muni d'une PUF destinée à appliquer un protocole d'authentification de type défi-réponse. Le système électronique est configuré pour diffuser un unique défi à l'ensemble de composants électroniques, et le calculateur est configuré pour recevoir en retour de l'ensemble de composants électroniques au moins une réponse lui permettant de vérifier l'intégrité de cet ensemble de composants électroniques en comparant ladite au moins une réponse à au moins une réponse attendue préalablement mémorisée dans le dispositif mémoire, l'intégrité de l'ensemble de composants électroniques étant authentifié comme étant valide si ladite au moins une réponse et ladite au moins une réponse attendue coïncident.

Ceci permet de faire propager l'interrogation d'un même défi de manière simple et rapide à travers l'ensemble de composants électroniques permettant de réaliser une authentification mutuelle deux-à-deux entre les différents composants électroniques.

Il est important de noter que l'utilisation d'une PUF dans chaque composant électronique rend inutile le recours à des secrets partagés. Il n'est donc pas nécessaire d'établir des secrets partagés à l'avance entre le dispositif de mémoire, le calculateur et les composants électroniques.

Selon un premier mode de réalisation, le calculateur est configuré pour récupérer un ensemble de réponses individuelles depuis ledit ensemble de composants électroniques et pour le comparer de manière bijective à un ensemble de réponses individuelles attendues propres audit défi et audit ensemble de composants électroniques.

Ainsi, l'authentification mutuelle entre les différents composants électroniques peut être réalisée de manière simple sans ajouter des nouvelles fonctionnalités aux composants.

Selon un deuxième mode de réalisation, le calculateur est configuré pour :
- récupérer un ensemble de réponses individuelles depuis ledit ensemble de composants électroniques,
- calculer une réponse de groupe en fonction dudit ensemble de réponses individuelles,
- comparer ladite réponse de groupe à une réponse de groupe attendue.

Ceci permet de gagner du temps en permettant au calculateur d'interroger la base de données d'enrôlement qu'une seule fois tout en minimisant la taille de cette base de données.

Selon un troisième mode de réalisation, un composant électronique spécifique parmi l'ensemble de composants électroniques est configuré pour disposer d'un ensemble de réponses représentatives, de manières explicites ou implicites, de l'ensemble de réponses individuelles, lui permettant de calculer et de transmettre une réponse de groupe au calculateur qui lui, est configuré pour comparer ladite réponse de groupe à une réponse de groupe attendue.

Ceci permet de minimiser la consommation d'interrogation de la base de donnée d'enrôlement et permet au calculateur de minimiser le temps en n'interrogeant que le composant électronique spécifique pour avoir la réponse de groupe. En outre, une éventuelle attaque contre le calculateur ne réussira pas à modifier le calcul de réponse de groupe.

Avantageusement, ledit ensemble de réponses disposé par le composant électronique spécifique comporte au moins une réponse de groupe intermédiaire calculée par au moins un autre composant électronique.

Ceci permet de simplifier l'architecture du système et permet d'avoir des modules facilement interchangeables.

Selon un quatrième mode de réalisation, chacun des composants électroniques est configuré pour disposer de l'ensemble de réponses individuelles lui permettant de calculer et de transmettre une réponse de groupe au calculateur qui lui est configuré pour comparer la réponse de groupe reçue depuis l'un quelconque des composants électroniques à une réponse de groupe attendue.

Ceci permet au calculateur de minimiser le temps en n'interrogeant qu'un seul composant électronique. En outre, en cas d'indisponibilité d'un composant électronique, le calculateur peut interroger n'importe quel autre composant électronique pour avoir la réponse de groupe. De plus, comme précédemment, une attaque contre le calculateur ne peut pas modifié le calcul de réponse de groupe.

Selon un mode de réalisation particulier, le système électronique est configuré pour faire appel à une première clé de chiffrement pour former une liaison sécurisée entre le calculateur et au moins un composant électronique, dit composant électronique d'identification, parmi l'ensemble de composants électroniques, le calculateur étant configuré pour transmettre un défi utilisateur au composant électronique d'identification en utilisant la liaison sécurisée, le composant électronique d'identification étant configuré pour réaliser une mesure sur l'utilisateur au moyen dudit défi utilisateur et d'envoyer par la liaison sécurisée la réponse de la mesure au calculateur qui lui est configuré pour comparer la réponse de la mesure avec une réponse d'identification attendue mémorisée préalablement par le dispositif mémoire, l'utilisateur étant authentifié comme valide si la réponse de la mesure correspond à la réponse d'identification attendue.

Ainsi, par transitivité, le fait que le composant électronique d'identification déjà validé a authentifié l'utilisateur, garantie que tous les composants électroniques réalisent leurs mesures sur le même utilisateur. On notera que la clé de chiffrement est une clé temporaire que l'on construit au moment de l'exécution du protocole.

Avantageusement, le calculateur est configuré pour calculer la première clé de chiffrement à partir dudit unique défi et de la réponse individuelle dudit composant électronique d'identification.

Avantageusement, le calculateur est en outre configuré pour :
calculer une deuxième clé de chiffrement à partir dudit défi utilisateur et de ladite réponse de la mesure, la deuxième clé de chiffrement étant partagée entre le calculateur et le composant électronique d'identification,
calculer une troisième clé de chiffrement à partir des première et deuxième clés de chiffrement, la deuxième clé de chiffrement étant partagée entre le calculateur et le composant électronique d'identification,
échanger des données chiffrées entre le composant électronique d'identification et le calculateur en utilisant la troisième clé de chiffrement.

Avantageusement, le dispositif mémoire comporte une base de données distante de l'ensemble de composants électroniques et du calculateur.

Avantageusement, l'ensemble de composants électroniques et le calculateur forment une partie d'un dispositif électronique correspondant à un smartphone, ou une montre électronique connectée à Internet, ou des lunettes de réalité étendue connectées à Internet, ou un véhicule.

Avantageusement, l'ensemble de composants électroniques et le calculateur font partie d'un ensemble de dispositifs électroniques porté ou utilisé par l'utilisateur.

Avantageusement, l'ensemble de composants électroniques et le calculateur font partie d'un ensemble de dispositifs électroniques correspondant à un ensemble d'équipements dans un véhicule.

Avantageusement, les composants électroniques correspondent à des mémoires maintenues dans un circuit imprimé PCB.

L'invention vise également un procédé d'authentification de type défi-réponse, mis en oeuvre dans un système électronique selon l'une des caractéristiques précédentes.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
La Fig. 1 illustre très schématiquement un système électronique d'authentification, selon un mode de réalisation de l'invention ;
La Fig. 2 illustre très schématiquement un composant électronique correspondant à un capteur, selon un mode de réalisation de l'invention ;
Les Figs. 3-7 illustrent des diagrammes représentant les étapes mises en oeuvre lors d'une authentification d'un ensemble de composants électroniques par le système électronique, selon différents modes de réalisation de l'invention ;
La Fig. 8 illustre très schématiquement un système électronique d'authentification, selon un mode de réalisation particulier de l'invention ; et
La Fig. 9 illustre un diagramme représentant les étapes mises en oeuvre lors d'une authentification d'un utilisateur par le système électronique, selon un mode préféré de réalisation de l'invention.

### DESCRIPTION DÉTAILLÉE DE L'INVENTION

Le principe de l'invention est de faire propager un même défi à travers les composants électroniques d'un système afin de réaliser une authentification mutuelle entre les différents composants électroniques deux-à-deux.

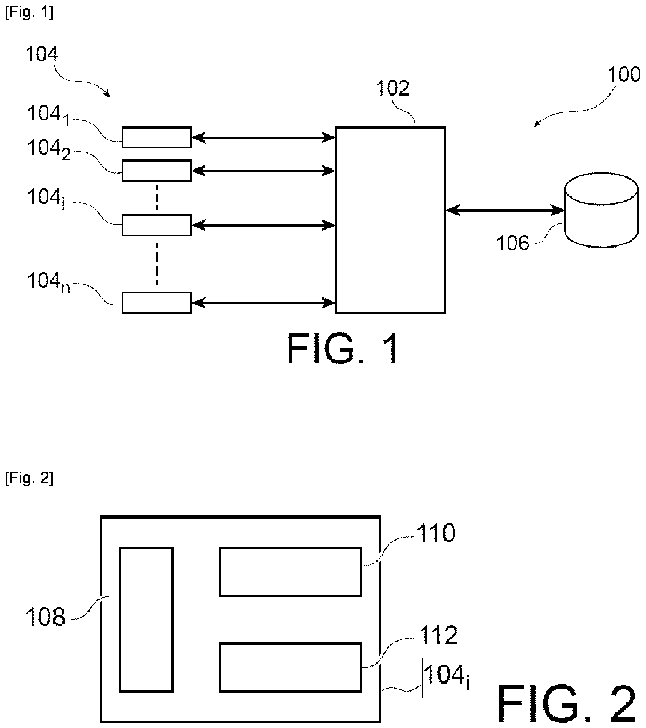

La Fig. 1 illustre très schématiquement un système électronique d'authentification, selon un mode de réalisation de l'invention.

Le système électronique 100 comporte au moins les éléments suivants : un calculateur 102, un ensemble de composants électroniques 104 et un dispositif mémoire 106. Les composants électroniques 104 sont référencés 1041,1042,...,104i,...,104n.

Le calculateur 102 correspond par exemple à une unité centrale de traitement CPU « Central Processing Unit », un microcontrôleur, un processeur d'application, ou tout autre dispositif de calcul électronique.

Le dispositif mémoire 106 est connecté au calculateur 102. Selon un exemple de réalisation avantageux, le dispositif mémoire 106 peut correspondre à une base de données distante du calculateur 102. Dans ce cas, le dispositif mémoire 106 peut communiquer via liaison confidentielle avec le calculateur 102 en passant par au moins un réseau de communication, par exemple Internet. En variante, le dispositif mémoire 106 peut correspondre à une mémoire locale faisant partie d'un dispositif incluant les composants électroniques 104 et le calculateur 102 et communiquant par exemple avec le calculateur 102 sans passer par un réseau externe au dispositif.

Le calculateur 102 et les composants électroniques 104 sont connectés entre eux par des liens directs ou indirects selon une configuration prédéterminée. De manière générale, le calculateur 102 et les composants électroniques 104 forme un circuit plus ou moins complexe où chaque élément (i.e. composant électronique ou calculateur) peut être directement connecté à un nombre quelconque d'autres éléments. Par exemple, ces éléments peuvent être connectés de manière séquentielle selon une chaine où chaque élément est connecté à au plus deux autres éléments. Un autre exemple, est le cas d'un circuit où chaque élément est connecté à tous les autres éléments.

Chaque composant électronique 104i comprend une 'fonction physique non clonable' PUF destinée à appliquer un protocole d'authentification de type défi-réponse. La PUF peut être obtenue en utilisant un ou plusieurs constituants du composant électronique 104. Le composant électronique 104i peut correspondre à un capteur, une mémoire, un actionneur, etc.

La PUF utilisé dans chaque composant électronique 104 peut appartenir indifféremment à l'une des deux grandes familles de PUF qui sont les faibles-PUF 'weak-PUF' et les fortes-PUF 'strong-PUF'. Si la PUF choisie est une strong-PUF, l'authentifiant génère un défi 'challenge' C, il est envoyé à la PUF qui génère une réponse R (propre à C). Cette réponse est renvoyée à l'authentifiant pour comparaison avec la réponse attendue. Ceci a pour avantage de se passer de la cryptographie et de secrets préalablement partagés. Dans le cas d'une weak-PUF, l'authentifiant défie la PUF en lui demandant sa clé, la PUF lui renvoie la réponse R (qui est sa clé fixe ou une information dérivée). Dans la suite de la description, on considère le cas des strong-PUF, sachant qu'il est simple de le transposer au cas des weak-PUF.

La Fig. 2 illustre très schématiquement un composant électronique correspondant à un capteur, selon un mode de réalisation de l'invention.

Dans ce cas, le composant électronique 104i est un capteur comportant un module de mesure 108, une interface numérique 110, et une mémoire volatile 112. Le module de mesure 108 transforme le paramètre physique, chimique ou biologique mesuré en un signal électrique analogique. L'interface numérique 110 est configuré pour réaliser la mise en forme du signal analogique de mesure en un signal numérique et assure la communication numérique de ce signal vers le calculateur 102 ou un autre composant.

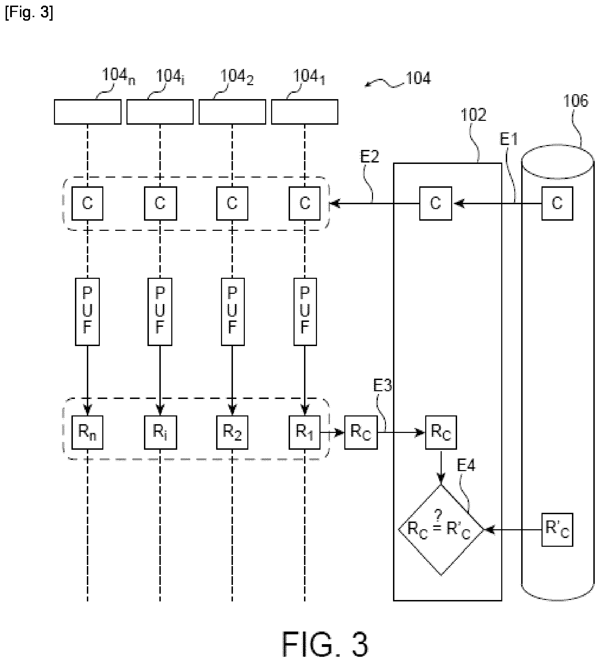

La Fig. 3 illustre un diagramme représentant les étapes mises en oeuvre lors d'une authentification d'un ensemble de composants électroniques par le système électronique, selon l'invention.

Lors des étapes E1 et E2, le système électronique 100 est configuré pour diffuser un unique défi d'authentification à l'ensemble de composants électroniques 104 référencés 1041,1042,..., 104i,...,104n. Autrement dit, le défi C est mutualisé pour interroger tous les composants électroniques 104 avec celui-ci.

Plus particulièrement, à l'étape E1, le calculateur 102 récupère depuis le dispositif mémoire 106, un défi C qui est commun à tous les composants électroniques 104 à authentifier. En effet le calculateur 102 connait quels composants électroniques 104 composent l'ensemble, il peut donc sélectionner un défi C pour lequel les réponses aux composants électroniques 104 à authentifier sont connues.

A l'étape E2, le calculateur 102 est configuré pour transmettre l'unique défi C à au moins un composant électronique 1041 qui calcule grâce à son PUF1 la réponse R₁ qu'il stocke temporairement. Ce dernier transmet ensuite le même défi C à au moins un autre composant électronique 1042 et ainsi de suite, de sorte que le même défi C se propage rapidement dans le système électronique 100 selon la configuration de connexion entre les différents composants électroniques 104 pour atteindre chacun d'eux.

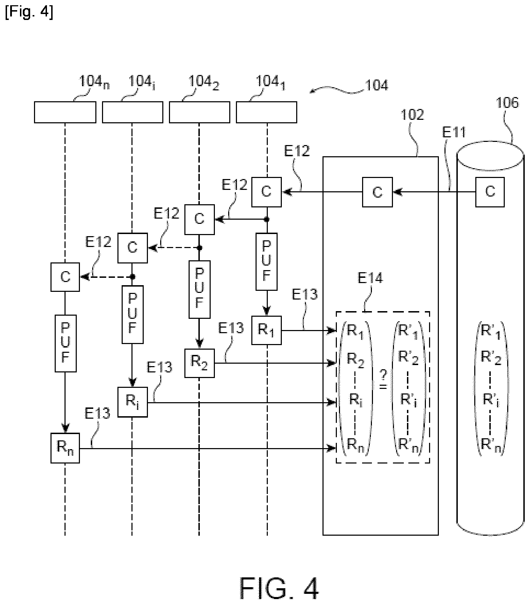

A l'étape E3, le calculateur 102 est configuré pour recevoir depuis l'ensemble de composants électroniques 104 au moins une réponse R_{c} à l'unique défi C. Selon différents modes de réalisations (voir Figs. 4-7), l'ensemble de composants électroniques 104 peut transmettre au calculateur 102 une unique réponse de groupe R_{c}= R_{g} ou un ensemble de réponses individuelles R_{c}= (R₁,..., Rₙ) ou un mélange de réponses de groupes partielles et des réponses individuelles.

A l'étape E4, le calculateur 102 est configuré pour comparer ladite au moins une réponse R_{c} à au moins une réponse attendue R'_{c} préalablement enregistrée dans le dispositif mémoire 106. Une équivalence entre ladite au moins une réponse R_{c} et ladite au moins une réponse attendue R'_{c} implique une authentification mutuelle entre les différents composants électroniques 104 deux-à-deux. Ainsi, l'intégrité de l'ensemble de composants électroniques 104 est authentifié comme étant valide si ladite au moins une réponse R_{c} et ladite au moins une réponse attendue R'_{c} coïncident.

Avant de réaliser l'authentification des composants électroniques 104, un enrôlement de ces composants électroniques 104 est tout d'abord mis en oeuvre. L'enrôlement de l'ensemble de composants électroniques 104 est par exemple réalisé en envoyant de nombreuses données de défi différentes à l'ensemble de composants électroniques 104 et en enregistrant dans le dispositif mémoire 106 les données de réponse renvoyées par l'ensemble de composants. Dans ce cas, l'enrôlement de l'ensemble de composants électroniques 104 peut correspondre à la construction, dans le dispositif mémoire 106, d'une table donnant, pour chacun des différents défis, des réponse attendues correspondantes. Chaque défi peut correspondre par exemple à des données communes de calibration avec lesquelles les composants électroniques 104 peuvent faire des mesures de référence.

La Fig. 4 illustre un diagramme représentant les étapes mises en oeuvre lors d'une authentification d'un ensemble de composants électroniques par le système électronique, selon un premier mode de réalisation de l'invention.

A l'étape E11, le calculateur 102 demande au dispositif mémoire 106 de fournir, parmi tous les défis des composants électroniques 104 mémorisées, un défi C commun à tous les composants électroniques 104 à authentifier.

A l'étape E12, le calculateur 102 est configuré pour envoyer le défi C à un premier composant électronique 1041 qui le transmet ensuite à un deuxième composant électronique 1042 et ainsi de suite jusqu'au dernier composant électronique 104n. Le défi C est soumis en entrée de chaque composant électronique 104i afin que la PUF du composant électronique 104i génère une réponse individuelle Rᵢ. Chaque réponse individuelle Rᵢ est propre au composant électronique 104i correspondant. On notera que les PUFs peuvent calculer leurs réponses en parallèle (c'est-à-dire, chacun en même temps) ou en série (c'est-à-dire, les uns après les autres).

A l'étape E13, chaque composant électronique 104i envoie sa réponse individuelle Rᵢ au calculateur 102. Un ensemble de réponses individuelles (R₁,..., Rₙ) de l'ensemble de composants électroniques 1041,1042,...,104i,...,104n correspondant est ainsi envoyé au calculateur 102.

A l'étape E14, après la récupération de l'ensemble de réponses individuelles (R₁,..., Rₙ) depuis l'ensemble de composants électroniques 104, le calculateur 102 est configuré pour comparer de manière bijective l'ensemble de réponses individuelles (R₁,..., Rₙ) à un ensemble de réponses individuelles attendues (R'₁,..., R'ₙ) propres au défi C et à l'ensemble de composants électroniques 104. L'ensemble de réponses individuelles attendues (R'₁,..., R'ₙ) est préalablement enregistré dans le dispositif mémoire 106.

Ce premier mode de réalisation présente une simple architecture et les composants électroniques restent intrinsèquement simples sans requérir des fonctionnalités supplémentaires. En revanche, en cas d'un très grand nombre de composants électroniques, ce système peut éventuellement solliciter une relativement grande base de données d'enrôlement.

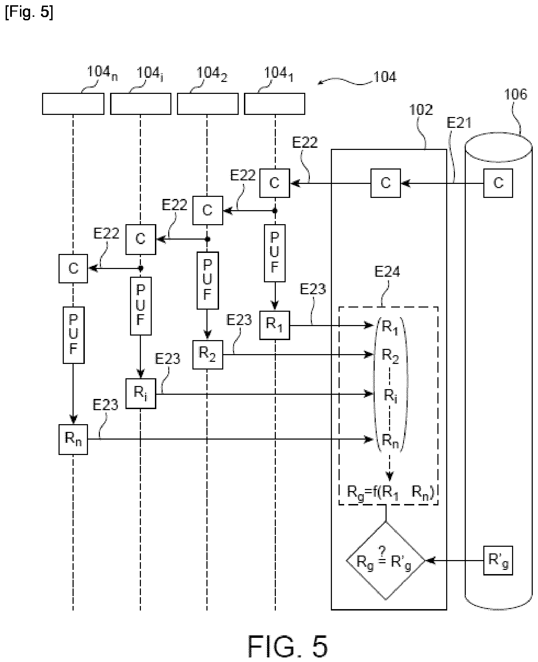

La Fig. 5 illustre un diagramme représentant les étapes mises en oeuvre lors d'une authentification d'un ensemble de composants électroniques par le système électronique, selon un deuxième mode de réalisation de l'invention.

Les étapes E21-E23 sont identiques à celles des étapes E11-E13 du premier mode de réalisation relatif à la Fig. 4.

A l'étape E24, le calculateur 102 récupère l'ensemble de réponses individuelles (R₁,..., Rₙ) depuis l'ensemble de composants électroniques 104. Grâce à une fonction prédéterminée f, le calculateur 102 est configuré pour calculer une réponse de groupe R_{g} en fonction de l'ensemble de réponses individuelles R_{g}=f(R₁,..., Rₙ). A titre d'exemple, la fonction prédéterminée f peut être une fonction parmi les fonctions suivantes : ou-exclusif bit à bit (XOR), concaténation, condensat (hash), chiffrement, addition, etc.

A l'étape E25, le calculateur 102 est configuré pour comparer la réponse de groupe R_{g} à une réponse de groupe attendue R'_{g} préalablement mémorisée par le dispositif mémoire 106. Ainsi, le calculateur 102 interroge la base de données d'enrôlement une seule fois au lieu d'un ensemble de fois de suite et par conséquent, diminue le temps de traitement tout en minimisant la taille de cette base de données.

A titre d'exemple, les PUF des différents composants électroniques 104 peuvent être enrôlés par le fabricant du matériel qui fournit aussi les réponses de groupes. Ceci permet au fabricant de maitriser l'intégrité des composants électroniques 104.

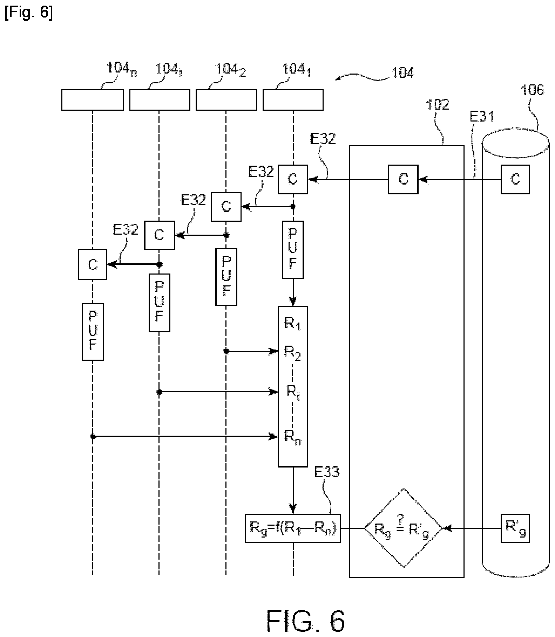

La Fig. 6 illustre un diagramme représentant les étapes mises en oeuvre lors d'une authentification d'un ensemble de composants électroniques par le système électronique, selon un troisième mode préféré de réalisation de l'invention.

Selon ce troisième mode de réalisation, un composant électronique spécifique parmi l'ensemble de composants électroniques 104 est configuré pour disposer d'un ensemble de réponses représentatives de manières explicites ou implicites de l'ensemble de réponses individuelles issues d'au moins une partie des composants électroniques 104. Dans ce cas, le composant électronique spécifique est configuré pour calculer une réponse de groupe en fonction de l'ensemble de réponses. Le composant électronique spécifique transmet la réponse de groupe au calculateur qui lui, est configuré pour comparer la réponse de groupe à une réponse de groupe attendue.

On notera que l'ensemble de réponses disposé par le composant électronique spécifique peut comporter au moins une réponse de groupe intermédiaire. La réponse de groupe intermédiaire est calculée par au moins un autre composant électronique en fonction de sa propre réponse individuelle et d'un sous-ensemble de réponses individuelles issues d'un sous-ensemble correspondant de composants électroniques.

Le processus selon la Fig. 6 se réfère au cas particulier où le composant électronique spécifique dispose de toutes les réponses individuelles à partir desquelles il calcule une réponse de groupe. Dans ce mode de réalisation, le composant électronique spécifique est référencé par 1041 sur la Fig.6.

Plus particulièrement, à l'étape E31, le calculateur 102 récupère depuis le dispositif mémoire, un défi C qui est commun à tous les composants électroniques 104 à authentifier. En effet le calculateur 102 connait quels composants électroniques 104 composent l'ensemble, il peut donc sélectionner un défi C pour lequel les réponses individuelles aux composants électroniques 104 à authentifier sont connues. Grâce à une fonction prédéterminée f, le calculateur 102 est configuré pour calculer une réponse de groupe attendue R'_{g} en fonction des réponses individuelles attendues R'_{g}=f(R'₁,..., R'ₙ). A titre d'exemple, la fonction prédéterminée f peut être un ou-exclusif, une concaténation, un condensat, un chiffrement, une addition, etc.

A l'étape E32, le calculateur 102 est configuré pour transmettre l'unique défi C au composant électronique spécifique 1041, dit premier composant électronique 1041, qui calcule grâce à son PUF la réponse individuelle R₁ qu'il stocke temporairement. Ce dernier transmet ensuite le même défi au deuxième composant électronique 1042. Le deuxième composant électronique 1042 calcule grâce à son PUF la deuxième réponse individuelle R₂ qu'il retransmet au premier composant électronique 1041. En outre, le deuxième composant électronique 1042 transmet ensuite le même défi C au troisième composant électronique 1043 et ainsi, de suite. Cette étape se répète sur chaque composant électronique 104i. Le dernier composant électronique 104n calcule grâce à son PUF la dernière réponse individuelle Rₙ qu'il retransmet au premier composant électronique 1041.

A l'étape E33, le premier composant électronique 1041 centralise les réponses individuelles R₁,...,Rₙ de l'ensemble de composants électroniques 104 à partir desquelles il calcule la réponse de groupe R_{g}=f(R₁,...,Rₙ), qu'il envoie ensuite au calculateur 102.

On notera que selon un mode de réalisation particulier, l'ensemble de réponses disposé par le composant électronique spécifique peut comporter au moins une réponse de groupe intermédiaire calculée par au moins un autre composant électronique. Cette réponse de groupe intermédiaire peut être calculée par ledit au moins un autre composant électronique en fonction de sa propre réponse individuelle et d'un sous-ensemble de réponses individuelles issues d'un sous-ensemble correspondant de composants électroniques. Toutefois dans la suite de la description relative à la Fig.6, on considère que le composant électronique spécifique 1041 dispose des réponses individuelles R₁,...,Rₙ.

A l'étape E34, le calculateur 102 est configuré pour comparer la réponse de groupe R_{g} à la réponse de groupe attendue R'_{g} préalablement enregistrée dans le dispositif mémoire 106. Si les deux réponses coïncident, le système aura pu authentifier l'ensemble de composants électroniques 104.

Ce troisième mode de réalisation permet de minimiser la consommation d'interrogation de la base de donnée d'enrôlement et permet au calculateur 102 de minimiser le temps en n'interrogeant que le composant électronique spécifique 1041 pour avoir la réponse de groupe. En outre, une éventuelle attaque contre le calculateur 102 ne réussira pas à modifier le calcul de la réponse de groupe.

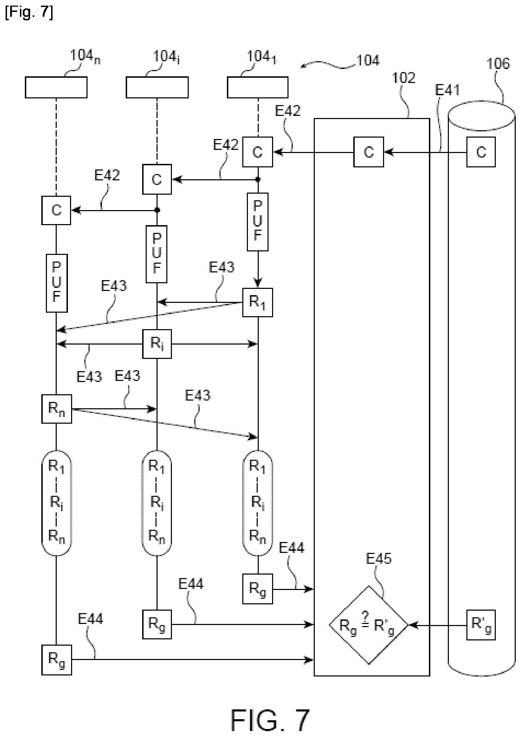

La Fig. 7 illustre un diagramme représentant les étapes mises en oeuvre lors d'une authentification d'un ensemble de composants électroniques par le système électronique, selon un quatrième mode préféré de réalisation de l'invention.

L'étape E41 est similaire à l'étape E31 de la Fig.6 dans laquelle le calculateur 102 récupère depuis le dispositif mémoire, un défi C qui est commun à tous les composants électroniques 104 à authentifier.

A l'étape E42, le calculateur 102 est configuré pour transmettre l'unique défi au premier composant électronique 1041, qui calcule grâce à son PUF la réponse individuelle R₁ qu'il stocke temporairement. Ce dernier transmet ensuite le même défi au deuxième composant électronique 1042. Le deuxième composant électronique 1042 calcule grâce à son PUF la deuxième réponse individuelle R₂ qu'il stocke temporairement et ainsi de suite.

A l'étape E43, chaque composant électronique 104i transmet sa propre réponse individuelle Rᵢ à tous les autres composants électroniques 104 de sorte que chaque composant électronique 104i dispose de toutes les réponses individuelles (R₁,...,Rₙ) lui permettant de calculer la réponse globale.

A l'étape E43, chaque composant électronique 104i centralise les réponses individuelles R₁,...,Rₙ de l'ensemble de composants électroniques 104 à partir desquelles il calcule la réponse de groupe globale R_{g}=f(R₁,...,Rₙ).

A l'étape E44, chaque composant électronique 104i peut transmettre sa réponse de groupe R_{g} au calculateur 102.

A l'étape E45, le calculateur 102 peut vérifier individuellement la réponse de groupe R_{g} auprès de tous les composants électroniques 104 authentifiés en comparant la réponse de groupe R_{g} à la réponse de groupe attendue R'_{g}. Ainsi, en cas d'indisponibilité d'un composant électronique, le calculateur peut utiliser la réponse de groupe provenant d'un autre composant électronique disponible.

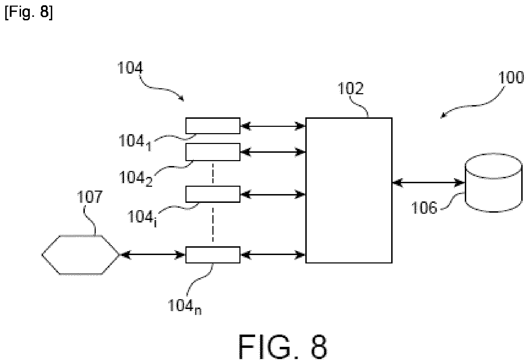

La Fig. 8 illustre très schématiquement un système électronique d'authentification, selon un mode de réalisation particulier de l'invention.

Cette figure se différencie de la Fig. 1 par le fait que le système électronique 100 prend également en compte l'authentification d'un utilisateur 107.

Ainsi, le système électronique 100 comporte un calculateur 102, un ensemble de composants électroniques 104 et un dispositif mémoire 106. Sur la Fig. 8, l'utilisateur est désigné par la référence 107.

Selon un exemple de réalisation particulier, au moins un des composants électroniques 104 est un composant électronique d'identification, correspondant à un capteur biométrique comme par exemple un capteur d'empreinte digitale. Ici, le composant électronique d'identification est désigné par la référence 104n.

Cet au moins un composant électronique d'identification 104n ou capteur biométrique peut faire partie d'un dispositif électronique incluant également les autres composants électroniques 104 et le calculateur 102 et avec lequel l'utilisateur 107 est destiné à s'authentifier ou à être authentifié. Le dispositif électronique peut correspondre à un smartphone, ou une montre électronique connectée à Internet, ou des lunettes de réalité étendue connectées à Internet, ou un véhicule connecté. Selon un autre exemple, l'ensemble de composants électroniques et le calculateur peuvent faire partie d'un ensemble de dispositifs électroniques porté ou utilisé par l'utilisateur comme un smartphone, et/ou une montre électronique connectée, et/ou des lunettes connectées, etc. L'ensemble de composants électroniques et le calculateur peuvent aussi faire partie d'un ensemble de dispositifs électroniques correspondant à un ensemble d'équipements dans un véhicule. Selon encore un autre exemple, les composants électroniques peuvent correspondre à des mémoires maintenues dans un circuit imprimé PCB.

L'authentification mutuelle deux-à-deux de type défi-réponse des composants électroniques a été décrite ci-dessus en références aux Figs. 3-7. L'authentification de type défi-réponse de l'utilisateur, mises en oeuvre par le système 100 est décrite ci-dessous.

Avant de réaliser l'authentification de l'utilisateur 107 un enrôlement de l'utilisateur est tout d'abord mis en oeuvre. Cet enrôlement de l'utilisateur est par exemple obtenu en réalisant différentes mesures par le composant électronique d'identification (capteur biométrique) 104n et en enregistrant dans le dispositif mémoire 106 les données de réponse correspondant à ces mesures d'authentification de l'utilisateur 107.

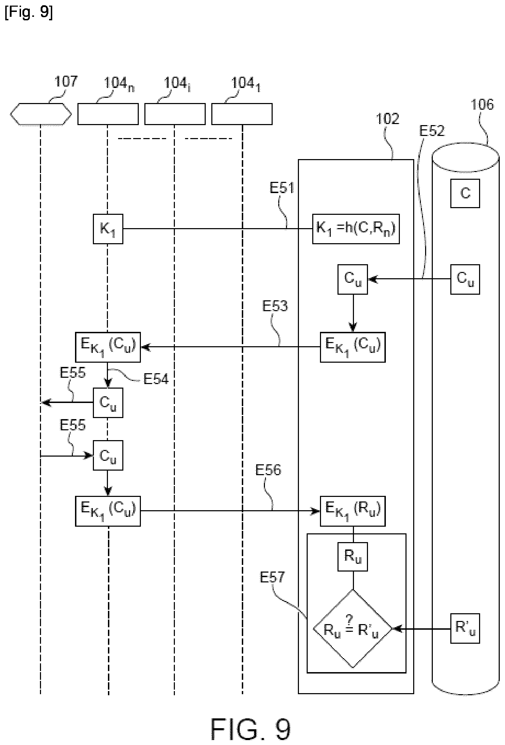

La Fig. 9 illustre un diagramme représentant les étapes mises en oeuvre lors d'une authentification d'un utilisateur par le système électronique, selon un mode préféré de réalisation de l'invention.

Le processus de l'authentification de l'utilisateur 107 peut continuer après que l'authentification de tous les composants électroniques 104 y compris celui du composant électronique d'identification 104n ait été préalablement réalisé selon l'un quelconque des modes de réalisations précédents des Fig. 3-7.

A ce stade, à l'étape E51, le système électronique 100 est configuré pour faire appel à une première clé de chiffrement K₁ pour former une liaison sécurisée entre le calculateur 102 et au moins un composant électronique d'identification 104n. Le calculateur 102 calcule la première clé de chiffrement K₁, par exemple avec une fonction de condensat h prenant en paramètre l'unique défi C et la réponse individuelle Rₙ du composant électronique d'identification 104n (K₁=C, Rₙ). Cette fonction h réalise par exemple une concaténation des données C et Rₙ et une fonction de condensat par exemple de type SHA-256. Sur la figure 8, la liaison sécurisée formée entre le calculateur 102 et le composant électronique d'identification 104n et faisant appel à la première clé de chiffrement K₁ est désignée symboliquement par la référence 118. Ainsi, après l'authentification du composant électronique d'identification 104n, les échanges de données entre le composant électronique d'identification 104n et le calculateur 102 peuvent être réalisées à travers la liaison sécurisée 118.

A l'étape E52, le calculateur 102 récupère des données de défi de l'utilisateur 107, appelées Cu, mémorisées dans le dispositif mémoire 106 et faisant partie des données d'identification valide de l'utilisateur 107 obtenues précédemment lors de l'enrôlement de l'utilisateur. Par exemple, dans le cas d'un composant électronique d'identification 104n correspondant à un capteur d'empreinte, les données de défi utilisateur Cu peuvent correspondre à un signal commandant l'illumination du doigt de l'utilisateur par le composant électronique d'identification 104n.

A l'étape E53, le calculateur 102 est configuré pour transmettre les données de défi utilisateur Cu au composant électronique d'identification 104n en utilisant la liaison sécurisée 118, c'est-à-dire en chiffrant ces données avec la première clé de chiffrement K₁. Sur la figure 9, les données C_{U} chiffrées avec la clé K₁ sont appelées E_{K1}(C_{U}).

A l'étape E54, le composant électronique d'identification 104n déchiffre le message reçu E_{K1}(C_{U}) pour reconstituer les données C_{U} non chiffrées.

A l'étape E55, le composant électronique d'identification 104n réalise une mesure d'authentification de l'utilisateur 107.

A l'étape E56, la réponse de la mesure, appelées Ru sur la figure 9, correspondant à la mesure d'authentification de l'utilisateur 107 par le composant électronique d'identification 104n, est envoyée depuis le composant électronique d'identification 104n au calculateur 102 via la liaison sécurisée. Pour cette transmission, les données de la réponse de la mesure Ru sont chiffrées en utilisant la première clé de chiffrement K₁, ces données chiffrées étant appelées E_{K1}(R_{U}) sur la figure 9.

A l'étape E57, la réponse de la mesure Ru est déchiffrée par le calculateur 102, puis comparée à une réponse d'identification attendue R'_{U} mémorisée préalablement par le dispositif mémoire 106. L'utilisateur 107 est authentifié comme étant valide si la réponse de la mesure R_{U} correspond à la réponse d'identification attendue R'_{U} de l'utilisateur. Ainsi, par transitivité, le fait que le composant électronique d'identification 104n déjà validé a authentifié l'utilisateur 107, garantie que tous les composants électroniques 104 réalisent leurs mesures sur le même utilisateur 107.

Après l'authentification de type défi-réponse de l'utilisateur 107, une deuxième clé de chiffrement K₂ peut être calculée par le calculateur 102 à partir des données de défi de l'utilisateur C_{U} et des données de la réponse de mesure R_{U} de l'utilisateur, par exemple avec la fonction de hachage h prenant en paramètres les données Cu et Ru. Ainsi, le calculateur 102 et le composant électronique d'identification 104n partagent une clé K₁ propre au couple formé du composant électronique d'identification 104n et du calculateur 102 et une clé K₂ propre au couple utilisateur/calculateur.

Une troisième clé de chiffrement K₃ peut ensuite être calculée à partir des première K₁ et deuxième K₂ clés de chiffrement et partagée entre le calculateur 102 et le composant électronique d'identification 104n. Cette troisième clé K₃ est par exemple obtenue en réalisant un condensat des premier et deuxième clés K₁, K₂ concaténées, ou en réalisant une opération de type « ou exclusif » entre les deux clés K₁, K₂. D'autres manières de calculer la clé K₃ sont possibles. La troisième clé K₃ calculée peut ensuite être utilisée pour échanger des données chiffrées entre le composant électronique d'identification 104n et le calculateur 102, et garantir la confidentialité des données dans la chaîne de traitement du système 100. La troisième clé K₃ peut être utilisée pour chiffrer les données stockées issues du composant électronique d'identification 104n, cette clé K₃ étant donc requise pour déchiffrer les données chiffrées issues du composant électronique d'identification 104n.

Dans un mode de réalisation particulier, le calculateur 102 peut utiliser un code correcteur afin de pouvoir régénérer la clé de chiffrement utilisée pour chiffrer les données échangées entre le composant électronique d'identification 104n et le calculateur 102, en cas de perturbations. Par exemple, un élément de type « helper data » peut être inclus dans le calculateur 102 et le composant électronique d'identification 104n pour être capable de corriger la donnée extraite en cas de perturbation.

Dans le calculateur 102, il est possible qu'une routine sécurisée soit exécutée pour interfacer le calculateur 102 avec le composant électronique d'identification 104n et ensuite générer la clé de chiffrement K₃ de façon sécurisée. L'utilisation d'enclave sécuritaire de type « Trust Execution Environment » (TEE) peut ainsi permettre la génération, le stockage et l'utilisation de cette clé de façon sécurisée. Dans le composant électronique d'identification 104n, un circuit numérique dédié peut être associé dans un circuit intégré du composant électronique d'identification 104n pour extraire les données d'authentification et générer la clé de chiffrement K₃ qui est stockée dans un registre interne ou une mémoire sécurisée du composant électronique d'identification 104n.

Le système électronique 100 peut être configuré pour mettre en oeuvre, périodiquement ou non, et après une première authentification de type défi-réponse de l'utilisateur :
- une autre authentification de type défi-réponse du composant électronique d'identification 104n, dans laquelle les données de réponse du composant électronique d'identification 104n sont destinées à être générées par la PUF du composant électronique d'identification 104n, et/ou
- une autre authentification de type défi-réponse de l'utilisateur, pendant laquelle les données échangées entre le calculateur 102 et le composant électronique d'identification 104n sont chiffrées en utilisant la première clé de chiffrement K₁ ou une autre clé de chiffrement calculée à partir des données de défi du composant électronique d'identification 104n et des données de réponse du composant électronique d'identification 104n générées obtenues lors de ladite autre authentification de type défi-réponse du composant électronique d'identification 104n.

Ainsi, la sécurité du système 100 est améliorée du fait que l'authenticité du composant électronique d'identification 104n et/ou de l'utilisateur est vérifiée de nouveau après la première authentification de l'utilisateur.

## Revendications

1. Système électronique d'authentification comportant un calculateur (102), un dispositif mémoire (106) connecté au calculateur (102), et un ensemble de composants électroniques (104), le calculateur (102) et les composants électroniques (104) sont connectés entre eux par des liens directs ou indirects selon une configuration prédéterminée, chacun des composants électroniques (104) étant muni d'une PUF destinée à appliquer un protocole d'authentification de type défi-réponse, **caractérisé en ce que** le système électronique est configuré pour diffuser un unique défi (C) à l'ensemble de composants électroniques (104), et **en ce que** le calculateur (102) est configuré pour recevoir en retour de l'ensemble de composants électroniques au moins une réponse (R_{c}) lui permettant de vérifier l'intégrité de cet ensemble de composants électroniques (104) en comparant ladite au moins une réponse à au moins une réponse attendue (R'_{c}) préalablement mémorisée dans le dispositif mémoire (106), l'intégrité de l'ensemble de composants électroniques (104) étant authentifié comme étant valide si ladite au moins une réponse (R_{c}) et ladite au moins une réponse attendue (R'_{c}) coïncident.

2. Système selon la revendication 1, **caractérisé en ce que** le calculateur (102) est configuré pour récupérer un ensemble de réponses individuelles (R₁,..., Rₙ) depuis ledit ensemble de composants électroniques (104) et pour le comparer de manière bijective à un ensemble de réponses individuelles attendues (R'₁,..., R'ₙ) propres audit défi (C) et audit ensemble de composants électroniques.

3. Système selon la revendication 1, **caractérisé en ce que** le calculateur (102) est configuré pour :
- récupérer un ensemble de réponses individuelles depuis ledit ensemble de composants électroniques,
- calculer une réponse de groupe en fonction dudit ensemble de réponses individuelles,
- comparer ladite réponse de groupe à une réponse de groupe attendue.

4. Système selon la revendication 1, **caractérisé en ce que** un composant électronique spécifique parmi l'ensemble de composants électroniques est configuré pour disposer d'un ensemble de réponses représentatives, de manières explicites ou implicites, de l'ensemble de réponses individuelles, lui permettant de calculer et de transmettre une réponse de groupe au calculateur qui lui, est configuré pour comparer ladite réponse de groupe à une réponse de groupe attendue.

5. Système selon la revendication 4, **caractérisé en ce que** ledit ensemble de réponses disposé par le composant électronique spécifique comporte au moins une réponse de groupe intermédiaire calculée par au moins un autre composant électronique.

6. Système selon la revendication 1, **caractérisé en ce que** chacun des composants électroniques est configuré pour disposer de l'ensemble de réponses individuelles lui permettant de calculer et de transmettre une réponse de groupe au calculateur qui lui est configuré pour comparer la réponse de groupe reçue depuis l'un quelconque des composants électroniques à une réponse de groupe attendue.

7. Système selon l'une quelconque des revendications précédentes, **caractérisé en ce que** le système est configuré pour faire appel à une première clé de chiffrement pour former une liaison sécurisée entre le calculateur et au moins un composant électronique, dit composant électronique d'identification, parmi l'ensemble de composants électroniques, le calculateur étant configuré pour transmettre un défi utilisateur au composant électronique d'identification en utilisant la liaison sécurisée, le composant électronique d'identification étant configuré pour réaliser une mesure sur l'utilisateur au moyen dudit défi utilisateur et d'envoyer par la liaison sécurisée la réponse de la mesure au calculateur qui lui est configuré pour comparer la réponse de la mesure avec une réponse d'identification attendue mémorisée préalablement par le dispositif mémoire, l'utilisateur étant authentifié comme valide si la réponse de la mesure correspond à la réponse d'identification attendue.

8. Système selon la revendication 7, **caractérisé en ce que** le calculateur est configuré pour calculer la première clé de chiffrement à partir dudit unique défi et de la réponse individuelle dudit composant électronique d'identification.

9. Système selon la revendication 7 ou 8, **caractérisé en ce que** le calculateur est en outre configuré pour :
calculer une deuxième clé de chiffrement à partir dudit défi utilisateur et de ladite réponse de la mesure, la deuxième clé de chiffrement étant partagée entre le calculateur et le composant électronique d'identification,
calculer une troisième clé de chiffrement à partir des première et deuxième clés de chiffrement, la deuxième clé de chiffrement étant partagée entre le calculateur et le composant électronique d'identification,
échanger des données chiffrées entre le composant électronique d'identification et le calculateur en utilisant la troisième clé de chiffrement.

10. Système électronique selon l'une des revendications précédentes, dans lequel le dispositif mémoire comporte une base de données distante de l'ensemble de composants électroniques et du calculateur.

11. Système électronique selon l'une des revendications précédentes, dans lequel l'ensemble de composants électroniques et le calculateur forment une partie d'un dispositif électronique correspondant à un smartphone, ou une montre électronique connectée à Internet, ou des lunettes de réalité étendue connectées à Internet, ou un véhicule.

12. Système électronique selon l'une des revendications 1 à 10, dans lequel l'ensemble de composants électroniques et le calculateur font partie d'un ensemble de dispositifs électroniques porté ou utilisé par l'utilisateur.

13. Système électronique selon l'une des revendications 1 à 10, dans lequel l'ensemble de composants électroniques et le calculateur font partie d'un ensemble de dispositifs électroniques correspondant à un ensemble d'équipements dans un véhicule.

14. Système électronique selon l'une des revendications 1 à 10, dans lequel les composants électroniques correspondent à des mémoires maintenues dans un circuit imprimé PCB.

15. Procédé d'authentification de type défi-réponse, mis en oeuvre dans un système électronique selon l'une des revendications précédentes.
